# EUROPÄISCHE PATENTSCHRIFT

(11) **EP 0 767 045 B1**
(45) Veröffentlichungstag und Bekanntmachung des Hinweises auf die Patenterteilung: **20.02.2002**
(21) Anmeldenummer: 96115766.6
(22) Anmeldetag: 02.10.1996
(51) Int. Cl.: B29C 49/58, B29C 49/78, B29C 49/42, B29C 49/76

(54) **Elektrohydraulische Antriebseinrichtung für den Blasdorn einer Blasformmaschine**
Electrohydraulic driving device for a blow mandrel of a blow moulding machine
Dispositif d'entraînement électro-hydraulique pour un mandrin de soufflage d'une machine de moulage par soufflage

(30) Priorität: 05.10.1995 DE 19537109
(43) Veröffentlichungstag der Anmeldung: 09.04.1997
(73) Patentinhaber: Hesta-Graham GmbH & Co. KG, 70771 Leinfelden-Echterdingen (DE)
(72) Erfinder: Effenberger, Alfred, 70794 Filderstadt (DE)
(74) Vertreter: Lutz, Johannes Dieter, Dr.

(56) Entgegenhaltungen:
- CH-A- 438 689
- DE-A- 4 402 091
- DE-A- 4 443 194
- US-A- 4 159 293
- US-A- 4 187 070
- PATENT ABSTRACTS OF JAPAN vol. 014, no. 196 (M-0964), 20. April 1990 & JP 02 038020 A (HIROSHI SATO), 7. Februar 1990

## Beschreibung

Die Erfindung betrifft eine Antriebseinrichtung für den Blasdorn einer Blasformmaschine gemäß dem Oberbegriff des Patentanspruchs 1.

Eine Antriebseinrichtung dieser Art ist der CH-A 0 438 689 entnehmbar. In dieser Druckschrift ist mehrfach das Problem der einwandfreien Gestaltung des Flaschenhalsbereiches einer zu blasenden Kunststoffflasche angesprochen (vgl. z. B. Spalte 2, Zeilen 27 bis 32; Spalte 2, Zeile 35 bis Spalte 3, Zeile 2 sowie Spalte 3, Zeilen 32 bis 38). Dieses Problem ist auch in der US-A 4,187,070 behandelt, die zu diesem Zweck eine spezielle Gestaltung des Blaskopfes einer Blasformmaschine offenbart (vgl. z. B. Spalte 1, Zeilen 29 bis 35 sowie Spalte 2, Zeilen 65 bis Spalte 3, Zeile 2 und Spalte 3, Zeilen 53 bis 59).

Es sind auch Antriebseinrichtungen an Kunststoffformmaschinen bekannt, die mit Hilfe elektrisch ansteuerbarer Proportional- oder Servoventile realisiert sind, die mit elektronisch steuerbarer Positions-Sollwert-Vorgabe und elektronischer Positions-Istwert-Rückmeldung arbeiten. Derartige Antriebseinrichtungen sind jedoch mit dem Nachteil behaftet, daß für die elektronische Positions-Istwert-Rückmeldung Verarbeitungszeit benötigt wird, die sich bei einer Blasformmaschine in einer Vergrößerung der Blaszykluszeiten niederschlagen und demgemäß zu einem vergleichsweise langsamen Anfahren der Blasposition zwingen würde, um Beschädigungen der Schneidkante des Blasdornkopfes und/oder der Blasform zu vermeiden.

Aufgabe der Erfindung ist es daher, eine Antriebseinrichtung der eingangs genannten Art dahingehend zu verbessern, daß - im Eilgangbetrieb - ein rasches und präzises Anfahren der Blasposition des Blasdorns möglich ist.

Diese Aufgabe wird erfindungsgemäß durch die kennzeichnenden Merkmale des Patentanspruchs 1 gelöst, bevorzugt in der Kombination gemäß Anspruch 2. Durch die Merkmale des Anspruchs 3 wird ein besonders rasches Erreichen der Blasposition des Blasdorns erzielt.

Weitere Einzelheiten der erfindungsgemäßen Antriebseinrichtung ergeben sich aus der nachfolgenden Beschreibung eines speziellen Ausführungsbeispiels anhand der Zeichnung. Es zeigen
- Fig. 1: ein elektrohydraulisches Blockschaltbild einer erfindungsgemäßen Antriebseinrichtung;
- Fig. 2a bis 2d: Darstellungen aufeinanderfolgender charakteristischer Positionen des Blasdorns zur Erläuterung der Antriebssteuerung und
- Fig. 3: ein Diagramm zur Erläuterung der Funktion der Antriebseinrichtung gemäß Fig. 1.

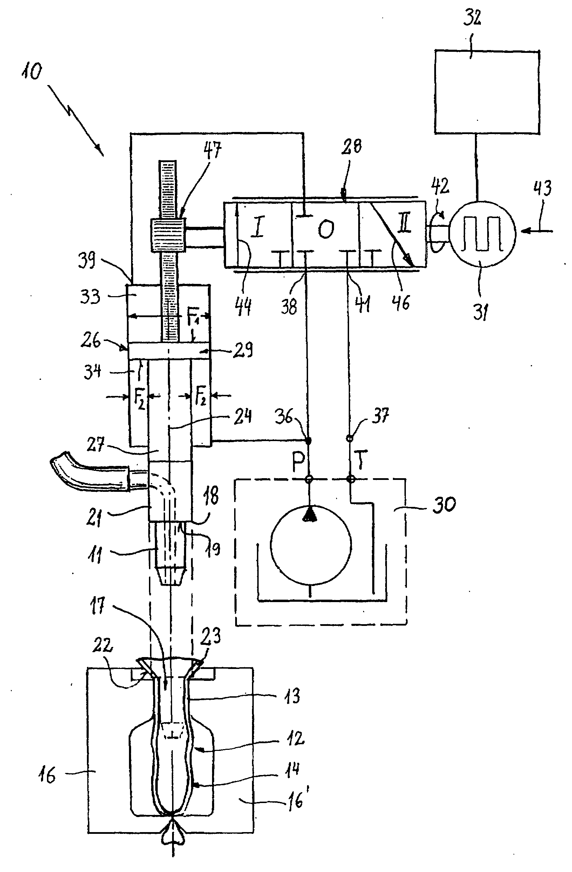

Die in der Fig. 1 insgesamt mit 10 bezeichnete elektrohydraulische Antriebseinrichtung ist für die Steuerung von Vorschub- und Rückzugsbewegungen des Blasdorns 11 einer im wesentlichen durch diesen sowie die Antriebseinrichtung 10 und eine Blasform 16,16' repräsentierten Blasformmaschine gedacht, mit der Hohlkörper 12, z.B. Kunststoff-Flaschen herstellbar sind, die in ihrem Halsbereich 13 - dem Kalibrierbereich - ein Außengewinde zum Aufschrauben einer - nicht dargestellten - Verschlußkappe haben.

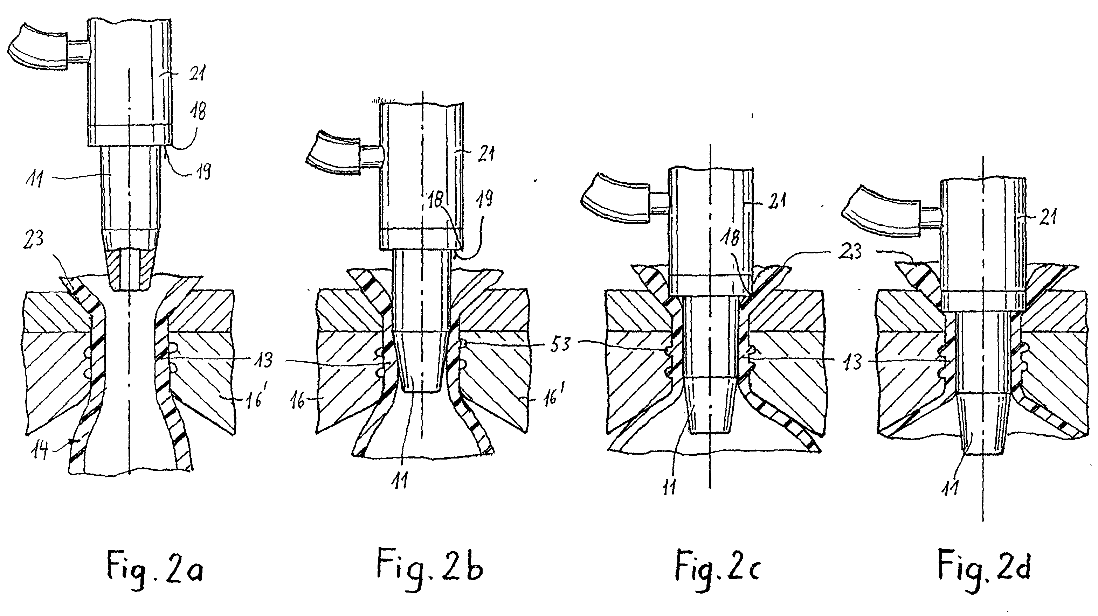

Für die Blasformmaschine ist vorausgesetzt, daß das Kalibrieren des Halsbereiches 13 des herzustellenden Form-Hohlkörpers 12 durch Einführen des Blasdorns 11 in die durch den durch Extrudieren erstellten Kunststoff-Vorformling 14 ausgekleidete, durch die geschlossene Blasform 16,16' berandete Blasformöffnung 17 erfolgt. Hierbei wird der Blasdorn 11 von einer oberen, in der Fig. 1 dargestellten, Endstellung als Ausgangsstellung ausgehend, in der er in einem lichten, vertikalen Abstand von der Blasformöffnung 17 angeordnet ist, über in den Fig. 2a bis 2c dargestellte Zwischenstellungen bis in die in der Fig. 2d dargestellte, in der Fig. 1 lediglich gestrichelt eingezeichnete, untere Endstellung geschoben, in der der Blasdorn 11 mit einem eine Schneid- und Scherkante 18 bildenden Rand einer radialen, die Formung der Ring-Stirnfläche des Flaschenhalses des fertigen Hohlkörpers 12 vermittelnden Ringschulter 19 eines außen zylindrischen Kopfes 21 des Blasdorns 11 im inneren Randbereich einer sich nach außen trichterförmig erweiternden konischen Randfläche 22 der durch die Formhälften 16 und 16' berandeten Formöffnung 17 axial abgestützt ist. In dieser unteren, in der Fig. 2d dargestellten Endstellung des Blasdorns 11, in der die Endphase des Blasvorganges mit dem höchsten Blasdruck erfolgt, ist ein kragenförmiger Rand 23 überstehenden Materials des Vorformlings 14 vollständig oder weitestgehend vom kalibrierten Flaschenhals 13 abgeschert, so daß er nach dem Herausziehen des Blasdorns 11 aus dem geblasenen Hohlkörper 12 und dem Öffnen der Form 16,16' ohne nennenswerten Kraftaufwand abgestochen oder weggeschlagen werden kann.

Die Antriebseinrichtung 10 umfaßt einen "stehend" - mit vertikalem Verlauf seiner zentralen Längsachse 24 - angeordneten, doppelt wirkenden linearen Hydrozylinder 26 mit einseitig nach unten aus dem Gehäuse herausragender Kolbenstange 27, an deren unterem freiem Ende der Kopf 21 des Blasdorns 11 angeordnet ist, ein lediglich schematisch angedeutetes Druckversorgungsaggregat 30 und - zur Bewegungssteuerung des Blasdorns 11 - ein Nachlaufregelventil 28, das mit elektromechanisch steuerbarer Sollwert-Vorgabe für die möglichen Positionen des Kolbens 29 des Antriebs-Hydrozylinders 26 und damit auch des Blasdorns 11 sowie mit mechanischer Positions-Istwert-Rückmeldung arbeitet, wobei zur diesbezüglichen Positions-Sollwertvorgabe ein Schrittmotor 31 vorgesehen ist, der durch Ausgangssignale einer elektronischen Steuereinheit 32 zur Einsteuerung inkrementaler Änderungen der Kolben-Positionen ansteuerbar ist.

Es versteht sich, daß anstelle eines Schrittmotors auch ein anderer inkremental geführter elektrischer Servomotor verwendet werden kann, d.h., auch ein Wechselstrom- oder ein Gleichstrommotor, der zur Ausführung inkrementaler Drehbewegungen seines Rotors ansteuerbar ist.

Durch den Kolben 29 des Antriebs-Hydrozylinders 26 ist ein oberer Antriebsdruckraum 33 gegen einen unteren Antriebsdruckraum 34 druckdicht beweglich abgegrenzt, wobei die Kolbenfläche F1, auf der der Kolben 29 mit einem in den oberen Antriebsdruckraum 33 einkoppelbaren Druck beaufschlagt ist, wesentlich, z.B. 3 bis 5 mal, größer ist als die Ringfläche F2, auf der der Kolben 29 durch Druckeinkopplung in den unteren Antriebsdruckraum 34 des Antriebs-Hydrozylinders 26 beaufschlagbar ist. Bei dem zur Erläuterung gewählten Ausführungsbeispiel ist der untere Antriebsdruckraum 34 des Antriebs-Hydrozylinders - im Betrieb der Antriebseinrichtung 10 - permanent an den P-Hochdruckausgang 36 des Druckversorgungsaggregats 30 angeschlossen, so daß abwärts gerichtete Vorschubbewegungen des Blasdorns 11 durch Druckeinkopplung in den oberen Antriebsdruckraum 33 und aufwärts gerichtete Rückzugsbewegungen des Blasdorns 11 durch Druckentlastung des oberen Antriebsdruckraumes 33 des Antriebs-Hydrozylinders 26 steuerbar sind.

Demgemäß ist das Nachlauf regelventil als 3/3-Wege-Proportionalventil ausgebildet, das eine sperrende Grundstellung 0 hat, in der der obere Antriebsdruckraum 33 des Antriebs-Hydrozylinders sowohl gegen den P-Versorgungsanschluß 36 des Druckversorgungsaggregats 30 als auch gegen dessen T-Rücklaufanschluß 37 abgesperrt ist und durch Ansteuerung des elektrischen Schrittmotors 31 in alternativen Drehrichtungen in alternative Funktionsstellungen I und II steuerbar ist, denen alternative Bewegungsrichtungen des Kolbens 29 - und des Blasdorns 11 - entsprechen. In der erstgenannten Funktionsstellung I des Nachlaufregelventils 28 ist dessen Hochdruck-P-Anschluß 38 mit dem Steueranschluß 39 des oberen Antriebsdruckraumes 33 des Antriebs-Hydrozylinders 26 verbunden und dieser gegen den Rücklaufanschluß 41 des Nachlaufregelventils 28 und damit auch gegen den Rücklaufanschluß 37 des Druckversorgungsaggregats 30 abgesperrt, mit der Folge, daß der Kolben 29 des Antriebs-Hydrozylinders 26 eine abwärts-gerichtete Vorschubbewegung ausführt.

Es sei angenommen, daß das Nachlaufregelventil 28, ausgehend von seiner dargestellten Grundstellung 0, in seine Funktionsstellung I gelangt, wenn der Schrittmotor 31 zur Ausführung inkrementaler Drehungen in Richtung des Pfeils 42 der Fig. 1 angesteuert ist, der, gesehen in Richtung des Pfeils 43 dem Uhrzeigersinn entspricht.

Wird der Schrittmotor 31 im Gegenuhrzeigersinn angetrieben, so gelangt das Nachlaufregelventil 28 in seine zur Funktionsstellung I, in der der Durchflußpfad 44 freigegeben ist, alternative Durchflußstellung II, in der über einen nunmehr freigegebenen Durchflußpfad 46 des Nachlaufregelventils 28 der Steueranschluß 39 des oberen Antriebsdruckraumes 33 des Antriebs-Hydrozylinders mit dem Rücklaufanschluß 41 des Nachlaufregelventils verbunden und gegen den P-Versorgungsanschluß 38 des Nachlaufregelventils 28 abgesperrt ist, mit der Folge, daß der Blasdorn 11 zur Ausführung eines nach oben gerichteten Rückzugshubes angetrieben ist.

Das Nachlaufregelventil 28, für das eine Ausbildung als Dreh-Schieberventil vorausgesetzt sei, ist, entsprechend seiner Funktion als Proportionalventil so ausgebildet, das zwischen Aussteuerpositionen, die maximalen Auslenkungen seines Ventilkörpers im Sinne der Einnahme der alternativen Funktionsstellungen I und II entsprechen und die Durchflußquerschnitte der Durchflußpfade 44 oder 46 jeweils maximale Werte haben, und der Sperrstellung 0 die Durchflußquerschnitte dieser Durchflußpfade 44 und 46 zwischen einem Maximalwert und dem Wert 0 monoton variieren.

Die als Zahnstangengetriebe 47 dargestellte Positions-Rückmeldeeinrichtung des Nachlaufregelventils, für das, zum Zweck der Erläuterung, eine Ausbildung als Drehschieber-Ventil vorausgesetzt sei, dessen Kolben mittels des Schrittmotors 31 rotatorisch antreibbar ist, vermittelt in den hierdurch einsteuerbaren Bewegungsrichtungen des Kolbens 29 des Antriebs-Hydrozylinders 26 mit den rotatorischen Auslenkungen des Kolbens gleichsinnige Drehungen eines Gehäuseelements des Nachlaufregelventils 28, mit der Folge, daß in einem stationären Betriebszustand der Antriebseinrichtung 10, in der Gleichheit zwischen Positions-Istwert und Positions-Sollwert gegeben ist, das Nachlaufregelventil 28 seine Sperrstellung 0 einnimmt und dies, abgesehen von einem durch die Regelkreisverstärkung gegebenen Nachlauffehler auch dann gilt, wenn die Betätigungsgeschwindigkeit des Kolbens 29 des Antriebs-Hydrozylinders einem durch die Frequenz dem Schrittmotor 31 zugeleiteter Ansteuerimpulse eingesteuerten Sollwert der Bewegungsgeschwindigkeit entspricht. Wird eine zur Einsteuerung einer definierten Vorschubgeschwindigkeit des Blasdorns 11 mit einer damit verknüpften Ausgabefrequenz erzeugte Ausgangs-Impulsfolge der elektronischen Steuereinheit 32 beendet, so führt dies dazu, daß das Nachlauf-Regelventil in seine - sperrende - Mittelstellung 0 gelangt, mit der ein Stillstand des Kolbens 29 des Antriebs-Hydrozylinders 26 in der bis dahin eingesteuerten, durch die Anzahl der Ansteuerimpulse bestimmten Soll-Position verknüpft ist, und, falls der Kolben 29 des Antriebs-Hydrozylinders aufgrund seiner mechanischen Trägheit über diese Position hinausgefahren sein sollte, daß das Nachlaufregelventil 28 hierdurch in die zur zuvor genutzten Durchflußstellung I oder II alternative Funktionstellung gelangt und hierdurch der Kolben 29 im Sinne einer Rückkehr in die Soll-Position angesteuert wird, so daß in jedem Falle Gleichheit von eingesteuerter Soll-Position und Ist-Position des Kolbens 29 des Antriebs-Hydrozylinders 26 erreicht wird, wobei durch die mechanische Positions-Istwert-Rückmeldung und die elektronisch sehr rasch mögliche Veränderung der Ausgabefrequenz von Ansteuerimpulsen für den Schrittmotor 31 ein besonders rasches und sensibles Reagieren der Antriebseinrichtung 10 auf Einstellungen und Änderungen von Soll-Positionen des Blasdorns 11 erreicht wird.

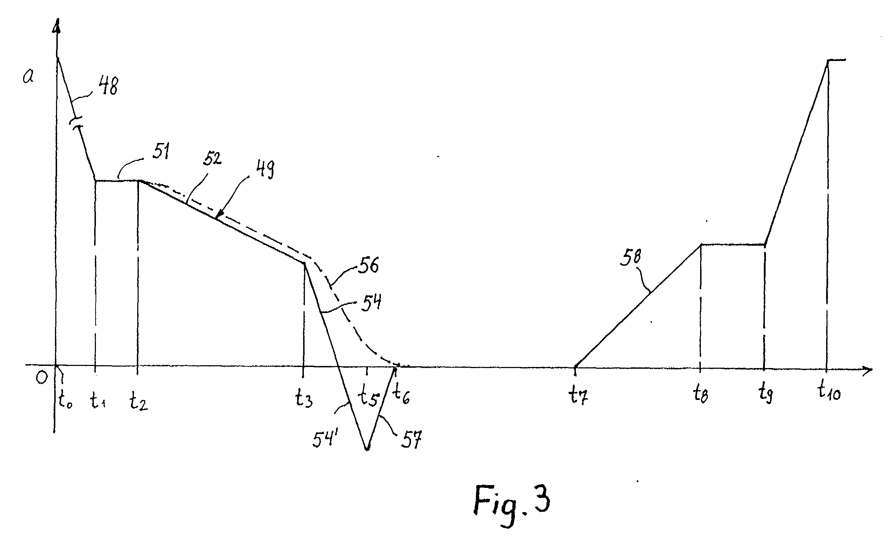

In einem typischen Blaszyklus wird die Antriebseinrichtung 10 wie folgt betrieben, wobei zur Erläuterung des Bewegungsablaufes des Blasdorns 11 auch auf das Diagramm der Fig. 3 Bezug genommen sei, in dem in ausgezogenen Linien qualitativ der zeitliche Verlauf der Positions-Sollwert-Vorgabe für den Blasdorn 11 in Einheiten des Abstandes der Schneidkante 18 des Blasdorn-Kopfes 21 von deren in der Fig. 2d dargestellter Endposition wiedergegeben ist und gestrichelt - ebenfalls qualitativ - der zeitliche Verlauf der Ist-Position dieser Schneidkante 18.

Beginnend im Zeitpunkt t0 wird der Blasdorn mit Eil-Vorschubgeschwindigkeit v1 auf die Blasform 16, 16' zubewegt, wobei sich die Positions-Sollwert-Vorgabe gemäß dem ersten abfallenden Ast 48 der Sollwert-Verlaufskurve 49 entwickelt, bis im Zeitpunkt t₁ eine der Fig. 2a entsprechende Position des Blasdorns 11 erreicht ist, in der dieser sich noch in einem lichten Abstand von dem Kunststoff-Material befindet und zwischen dem sich konisch verjüngenden Blasdornende und dem aus der Blasformöffnung 17 austretenden kragenförmigen Rand 23 des Kunststoff-Materials - der "Tulpe" - noch ein Ringspalt nennenswerten Durchmessers frei ist.

In dieser Position wird der Blasdorn 11 durch Beendigung der ersten Serie von Sollwert-Vorgabe-Impulsen für den Schrittmotor 31 angehalten und mit dem Vorblasen begonnen, damit sich der Kunststoff-Vorformling 14 mit seinem Halsbereich 13 an die Blasform 16,16' anlegen kann. Diese Stillstandsphase ist in der Fig. 3 durch den ersten "waagrechten" Ast 51 der Sollwert-Verlaufskurve 49 repräsentiert, der konstantem Positions-Sollwert entspricht.

Danach wird, beginnend im Zeitpunkt t₂ durch Ansteuerung des Schrittmotors 31 mit niedrigerer Impulsfolgefrequenz eine langsamere, nach unten gerichtete Vorschubgeschwindigkeit eingesteuert, wie durch den zweiten abfallenden Ast 52 der Sollwert-Verlaufskurve 49 repräsentiert. Im Verlauf dieser Bewegung des Blaskopfes 21 gelangt der Blaskopf 21 und der Blasdorn 11 in Berührung mit dem Halsbereich 13 des Kunststoff-Vorformlings 14, wie qualitativ durch die Fig. 2b wiedergegeben, wobei dieser zunehmend radial nach außen verdrängt wird und Formrillen 53, die zur Bildung des Flaschenhalsgewindes vorgesehen sind, zunehmend mit Kunststoff verfüllt werden. Diese langsame Vorschubgeschwindigkeit, die etwa 1/5 der Eilganggeschwindigkeit entspricht, wird eingesteuert, bis die Schneidkante 18 des Blasdornkopfes in Berührung mit dem Material des kragenförmigen Randes 23 gelangt und in dieses einzudringen beginnt, wie qualitativ durch die Fig. 2c wiedergegeben, wobei sich der Widerstand, gegen den der Blaskopf verschoben werden muß, erhöht. Ab dem Erreichen dieser Position, was im Zeitpunkt t₃ der Fall sein möge, wird, um ein schlagartiges Abquetschen der Tulpe 23 zu erreichen, die Vorschubgeschwindigkeit des Blasdorns 11 wieder auf den Wert der Eilganggeschwindigkeit erhöht, wie durch den dritten abfallenden Ast 54 der Sollwert-Verlaufskurve 49 repräsentiert. Da sich in diesem Betriebszustand der Nachlauffehler, der "Abstand" zwischen dem durch die gestrichelt eingezeichnete Verlaufskurve 56 repräsentierten Positions-Istwert und dem durch die Sollwert-Verlaufskurve 49,54 repräsentierten Positions-Sollwert, vergrößert, wird dieser Sollwert zunächst, wie durch den unterhalb der Abszisse verlaufenden Ast 54' der Sollwert-Verlaufskurve repräsentiert weiter abgesenkt und erst ab dem Zeitpunkt t₅ wieder, wie durch den ersten ansteigenden Ast 57 der Sollwert-Verlaufskurve wiedergegeben auf den tatsächlich gewünschten Positions-Sollwert angehoben, der Berührung der Schneidkante 18 mit der konischen Randfläche 22 der Formöffnung 17 entspricht. Der Zeitpunkt t₆, zu dem diese Sollwert-Einsteuerung erreicht ist, ist aufgrund des Regelverhaltens des Nachlauf-Regelventils 28 sehr genau abstimmbar, so daß die Steuerung mittels der elektronischen Steuereinheit 32 so ausgelegt werden kann, daß im Zeitpunkt t₆ praktisch Gleichheit von Positions-Sollwert und Positions-Istwert der Blasdorn-Position gegeben ist. Während der Blasdorn 11 diese in der Fig. 2d dargestellte Position einnimmt, wird, bis zum Zeitpunkt t₇ der Formhohlkörper 12 in seine endgültige Form geblasen. Danach wird nach dem Öffnen der Blasform 16,16' der Formhohlkörper 12 am Blasdorn 11 hängend mit mäßiger Geschwindigkeit angehoben, wie durch den zweiten ansteigenden Ast 58 der Positions-Sollwert-Verlaufskurve 49 repräsentiert, bis z.B. im Zeitpunkt t₈ eine Übernahmeposition erreicht ist, in der während einer kurzen Stillstandsphase der FormHohlkörper mittels einer Maske vom Blasdorn abgezogen wird und anschließend, ab dem Zeitpunkt t₉ der freie Blasdorn 11 mit Eilganggeschwindigkeit wieder in seine Ausgangsstellung angehoben wird, die im Zeitpunkt t₁₀ erreicht ist.

Durch die zwischen den Zeitpunkten t₃ und t₅ erfolgende Einsteuerung eines Positions-Sollwertes der unterhalb der funktionsgerechten Sollwert-Position liegt, wird erreicht, daß im Halsbereich eine gleichsam schlagartige Verdichtung des Kunststoff-Materials erfolgen kann und gleichzeitig vermieden, daß die Schneidkante 18 des Blasdorn-Kopfes 21 auf den konischen Rand 22 der Blasformöffnung hart auftrifft, was zu einer Beschädigung Anlaß geben könnte.

## Patentansprüche

1. Elektrohydraulische Antriebseinrichtung (10) für den Blasdorn (11) einer Blasformmaschine, der aus einer am Beginn eines Blaszyklus eingenommenen Ausgangsstellung oberhalb einer einen Vorformling eines zu blasenden Hohlkörpers (12) enthaltenden Blasform (16, 16') heraus in die Blasposition verschiebbar ist, in der er in den Kalibrierbereich der Form eingetaucht ist, und bei Beendigung des Blaszyklus aus dieser zurück in die Ausgangsstellung bewegbar ist, wobei die Anfangsphase der Vorschubbewegung in einem Eilgangbetrieb erfolgt, auf die eine während des Kalibriervorganges mit geringerer Vorschubgeschwindigkeit jedoch erhöhter Vorschubkraft gesteuerte Lastgang-Vorschubphase und hierauf, nachdem eine Schneidkante (18) des Blasdornkopfes (21) in Berührung mit dem Kunststoffmaterial gelangt ist, wieder eine Eilgang-Vorschubphase folgt, die in die Blasposition des Blasdorns als untere Endstellung führt, und eine den Blasdorn nach Abschluß des Blasvorganges in die Ausgangsstellung zurückführende Rückzugsbewegung wieder im Eilgangbetrieb der Antriebseinrichtung erfolgt, die als Linearantrieb einen doppelt wirkenden Hydrozylinder (26) hat, der mittels einer elektrohydraulischen Steuerungseinrichtung steuerbar ist, **dadurch gekennzeichnet, daß** die elektrohydraulische Steuerungseinrichtung ein Nachlaufregelventil (28) umfaßt, das mit elektromechanisch steuerbarer Positions-Sollwert-Vorgabe für den Blasdorn (11) und mechanischer Positions-Istwert-Rückmeldung arbeitet, daß zur Sollwert-Vorgabe-Ansteuerung des Nachlauf-Regelventils ein inkremental geführter elektrischer Servomotor (31) vorgesehen ist, der durch Ausgangssignale einer elektronischen Steuereinheit (32) zur Einsteuerung inkrementaler Positions-Sollwert-Änderungen ansteuerbar ist, und daß die elektronische Steuereinheit (32) dahingehend ausgelegt ist, daß am Beginn der Eilgang-Betriebsphase, in der der Blasdorn unter Last in die Blasposition gelangt, ein Positions-Sollwert eingesteuert wird, der, in Vorschubrichtung gesehen, jenseits der Blasposition ist und erst danach, jedoch bevor die Ist-Position der Blasposition entspricht, diese als Soll-Position einsteuert.

2. Antriebseinrichtung nach Anspruch 1, **dadurch gekennzeichnet, daß** der zur Sollwert-Vorgabe-Ansteuerung des Nachlauf-Regelventils (28) vorgesehene Servomotor (31) als Schrittmotor ausgebildet ist, der durch Ausgangssignale der elektrischen Steuereinheit (32) ansteuerbar ist.

3. Antriebseinrichtung nach Anspruch 1 oder Anspruch 2, **dadurch gekennzeichnet, daß** die nach dem Einsteuern der jenseits der Blasposition liegenden Soll-Position erfolgende Einsteuerung der Soll-Position mit höchstmöglicher Ausgabefrequenz der Ausgangssignale der elektronischen Steuereinheit (32) erfolgt.

## Claims

1. Electrohydraulic driving device (10) for the blow mandrel (11) of a blow moulding machine, which blow mandrel can be displaced out of a starting position, which is assumed at the beginning of a blowing cycle, above a blow mould (16, 16') containing a preform of a hollow body (12) to be blown, and into the blowing position in which it is plunged into the calibrating region of the mould, and can be moved out of the said blowing position and back into the starting position when the blowing cycle is terminated, wherein the initial phase of the feed movement takes place in a rapid-motion operation and is succeeded by a loaded-running feeding phase controlled during the calibrating operation at a lower feeding speed but with increased feeding force, and is thereupon again succeeded, after a cutting edge (18) on the blow mandrel head (21) has come into contact with the plastic material, by a rapid-motion feeding phase which leads into the blowing position of the blow mandrel as a lower end position, and a withdrawing movement, which guides the blow mandrel back into the starting position after the conclusion of the blowing operation, takes place once again in a rapid-motion operation of the driving device which has, as the linear drive, a double-acting hydraulic cylinder (26) which can be controlled by means of an electrohydraulic control device, **characterised in that** the electrohydraulic control device comprises a follow-up regulating valve (28) which works with electromechanically controllable ideal-positional-value presetting for the blow mandrel (11) and mechanical actual-positional-value feedback, that an incrementally guided electric servomotor (31), which can be activated by output signals from an electronic control unit (32) for inserting incremental ideal-positional-value changes, is provided for activating the ideal-value presetting of the follow-up regulating valve, and that the electronic control unit (32) is designed to the effect that, at the beginning of the rapid-motion operating phase in which the blow mandrel passes, under load, into the blowing position, an ideal positional value is inserted which, viewed in the direction of feed, is on the other side of the blowing position and only after that, but before the actual position corresponds to the blowing position, inserts the latter as the ideal position.

2. Driving device according to claim 1, **characterised in that** the servomotor (31) provided for activating the ideal-value presetting of the follow-up regulating valve (28) is constructed as a stepping motor which can be activated by output signals from the electronic control unit (32).

3. Driving device according to claim 1 or claim 2, **characterised in that** the insertion of the ideal position, which insertion takes place after the insertion of the ideal position lying on the other side of the blowing position, takes place at the highest possible output frequency of the output signals of the electronic control unit (32).

## Revendications

1. Dispositif d'entraînement (10) électrohydraulique pour le mandrin de soufflage (11) d'une machine de moulage par soufflage, qui peut être déplacé à partir d'une position de départ occupée au début d'un cycle de soufflage au-dessus une tuyère (16, 16') incluant une préforme d'un corps (12) à souffler dans la position de soufflage, dans laquelle il est plongé dans la zone de calibrage du moule, et une fois le cycle de soufflage achevé, peut être ramené à partir de cette position dans la position de départ, la phase initiale de l'avancement s'effectuant dans un mode de marche rapide, suivie de la phase d'avance de charge commandée pendant l'opération de calibrage avec une vitesse d'avancement plus faible mais une force d'avancement élevée et ensuite, après qu'une arête de coupe (18) de la tête du mandrin de soufflage (21) est arrivée en contact avec le matériau plastique, d'une phase d'avance rapide, qui débouche dans la position de soufflage du mandrin de soufflage comme position finale inférieure, et un mouvement de recul reculant le mandrin de soufflage dans la position de départ après l'achèvement de l'opération de soufflage s'effectuant à nouveau dans le mode de marche rapide du dispositif d'entraînement, qui présente comme entraînement linéaire un cylindre hydraulique (26) à double effet, qui peut être commandé au moyen d'un système de commande électrohydraulique, **caractérisé en ce que** le système de commande électrohydraulique comprend une vanne de régulation d'asservissement (28), qui travaille avec une spécification de valeur théorique de position pouvant être commandée de façon électromécanique pour le mandrin de soufflage (11) et un rétro signal mécanique de valeur réelle de position, **en ce que**, pour la commande de la spécification de la valeur théorique de la vanne de régulation d'asservissement, il est prévu un servomoteur (31) électrique guidé de façon incrémentielle, qui peut être commandé par des signaux de sortie d'une unité de commande (32) électronique pour le déclenchement de variations incrémentielles de la valeur théorique de position, et **en ce que** l'unité de commande (32) électronique est conçue en ce sens qu'au début de la phase d'exploitation avec avance rapide, dans laquelle le mandrin de soufflage arrive sous charge dans la position de soufflage, on amorce une valeur théorique de position, qui, vu dans le sens d'avancement, va au-delà de la position de soufflage et, seulement après, mais avant que la position réelle corresponde à la position de soufflage, amorce celle-ci comme position théorique.

2. Système d'entraînement selon la revendication 1, **caractérisé en ce que** le servomoteur (31) prévu pour la commande de spécification de valeur théorique de la vanne de régulation d'asservissement (28) est conçu comme un moteur pas à pas, qui peut être commandé par des signaux de sortie de l'unité de commande (32) électrique.

3. Dispositif d'entraînement selon la revendication 1, ou la revendication 2, **caractérisé en ce que** l'amorçage de la position théorique, qui s'effectue après l'amorçage de la position théorique située au-delà de la position de soufflage, intervient avec une fréquence de sortie la plus élevée possible des signaux de sortie de l'unité de commande (32) électronique.
